Europäisches Patentamt

(19) European Patent Office

Office européen des brevets

(11) Publication number: **0 105 722**

**A1**

## (12) EUROPEAN PATENT APPLICATION

(21) Application number: 83305868.8

(22) Date of filing: 29.09.83

(51) Int. Cl.³: **D 21 C 9/00**
D 21 J 1/00, D 21 J 3/00
D 21 J 7/00, D 21 D 3/00
B 44 F 9/02, C 04 B 31/00

(30) Priority: 30.09.82 US 429243

(43) Date of publication of application:
18.04.84 Bulletin 84/16

(84) Designated Contracting States:
BE DE FR GB LU NL SE

(71) Applicant: Armstrong World Industries, Inc.
P.O. Box 3001
Lancaster Pennsylvania 17604(US)

(72) Inventor: Fornadel, John Stephen
464 North Prince Street
Millersville Pennsylvania 17551(US)

(72) Inventor: Long, Harry Franklin
2511 Chestnut View Drive
Lancaster Pennsylvania 17603(US)

(74) Representative: Darby, David Thomas et al,
Abel & Imray Northumberland House 303-306 High
Holborn
WC1V 7LH London(GB)

(54) Formable pulp compositions.

(57) Aqueous cellulosic slurries comprising primary binder,
newsprint, sulfite pulp, and vegetable shell flour can be
prepared and formed as desired into various configurations.
The materials thus formed are usable for a variety of
purposes including furniture, paneling and flooring struc-
tures.

- 1 -                     EPA-7344

## FORMABLE PULP COMPOSITIONS

The present invention relates to pulp compositions and more particularly to pulp compositions which may be formed into desired configurations.

The preparation of molded cellulosic materials has long been known in the art and substantial effort has been expended to develop moldable compositions which provide objects having good appearance and durability. The present invention concerns novel compostions and processes which provide wood-like products.

A number of references describe aqueous compositions which may be molded into a desired configuration. For example, U.S. Patent No. 3,825,471 discloses cardboard compositions prepared from kenaf fibers, cotton rags, gin waste and binder in an aqueous medium; U.S. Patent No. 3,988,270 describes extrusible aqueous compositions comprising up to 3% water, from 1 to 30% of a vegetable shell flour and a thermoplastic resin; U.S. Patent No. 4,012,561 discloses a process for forming decorative laminates comprising a substantial amount of waste newspaper whereby the newspaper is pulped and formed into sheets by conventional fourdrinier technology and then laminated together in multiple layer sheets; and U.S. Patent 4,248,743 discloses a composite comprising wood pulp and a polymeric matrix, sufficient polymeric material being present to provide a continuous polymeric matrix phase.
Nevertheless, the compositions prepared according to
these references have not proved to be entirely
satisfactory for forming moldable products.

Accordingly, one objective of the present
invention is to provide unique aqueous-based moldable
compositions which may be formed in a variety of
configurations varying from flat sheets to distinctive
shapes such as furniture.

Another objective of the present invention is
to provide a process for utilizing these materials to
provide materials having a desired configuration.

Yet another objective of the present invention
is to provide molded products comprising sufficient
cellulosic materials to be accepted by consumers as
"wood" products.

These and other advantages of the present
invention will become apparent from the detailed
description of the preferred embodiments which follow.

The present invention is based on our discovery
that aqueous cellulosic slurries comprising primary
binder, newsprint, sulfite pulp, and vegetable shell
flour can be prepared and formed as desired into various
configurations.  The materials thus formed are usable
for a variety of purposes including furniture, paneling
and flooring structures.

In one embodiment, the present invention
comprises a cellulosic composition which is useful to
prepare articles having desired configurations, said
composition comprising by weight 100 parts of primary
binder, from about 25 to about 700 parts of newsprint,
from about 25 to about 500 parts of sulfite pulp, from
about 25 to about 500 parts of vegetable shell flour and
a suitable quantity of water.

In a second embodiment, the present invention
comprises a cellulosic product having a desired configuration, said product comprising by weight 100 parts of primary binder, from about 25 to about 700 parts of newsprint, from about 25 to about 500 parts of sulfite pulp and from about 25 to about 500 parts of vegetable shell flour.

In a third embodiment, the present invention comprises a process for preparing cellulosic articles having a desired configuration, said process comprising the steps of preparing an aqueous slurry comprising by weight from about 25 to about 700 parts of newsprint, from about 25 to about 500 parts of sulfite pulp, from about 25 to about 500 parts of vegetable shell flour, and optional components; adjusting the pH as necessary to cause precipitation of a subsequently added primary binder onto the solid components of said slurry; dispersing 100 parts of said primary binder in said slurry; disposing said slurry in a desired configuration; removing excess water from said slurry to form a preshaped article having the desired configuration; and drying said preshaped article.

In a fourth embodiment, the present invention comprises a process for preparing cellulosic articles having a desired configuration, said process comprising the steps of preparing a master batch slurry comprising from about 25 to about 700 parts of newsprint, from about 25 to about 500 parts of sulfite pulp and from about 25 to about 500 parts of vegetable shell flour; forming said master batch slurry into a mat; intermixing said mat with optional components and 100 parts of primary binder; and forming the intermixed material into a desired configuration.

The molded cellulosic products presently known in the art typically comprise a maximum of about 40-45% cellulosic materials. Although compositions containing higher levels of cellulose are known, these compositions have often proved to be unsatisfactory. For example, in U.S. Patent No. 4,248,743, which was referred to above, it is noted that Composition No. 4 (which comprises about 56% by weight of fiber) is crumbly and shows weak cleavage planes.

Surprisingly, we have discovered that moldable compositions may be prepared according to the present invention and used to produce products which contain substantially higher quantities of cellulosic materials, perhaps on the order of 90% or more. These products are useful for a variety of purposes, such as floor and wall coverings, decorative objects and furniture. Further, because of the high cellulose content, they are acceptable as wood products.

Another advantage of the present invention is that products can be formed which have substantially higher densities than products which are presently formed according to the prior art. Thus, whereas the present invention can conveniently be used to prepare molded products having a density of as high as 55 or more pounds per cubic foot (pcf) (881 kilograms per cubic meter), the prior art processes based on beater saturation technology and the like have conventionally been used to produce products having much lower densities.

The compositions of the present invention are based on 100 parts of primary binder. Examples of primary binders which will give suitable results are thermoset or thermoplastic binders such as urea-formaldehyde binders, melamine binders and latex binders, such as polyvinyl chloride binders, polyacrylate binders, polystyrene-butadiene (SBR) binders, chlorinated SBR binders, and carboxylated SBR binders. It is understood, however, that the aforementioned listing of primary binders is provided by way of illustration and is not intended to limit the scope of the present invention.

The purpose of the primary binders is to impart wood-like properties to the resulting product. Thus, the primary binders must be capable of providing acceptable tensile strengths, transverse strength,

- 5 -                    0105722

nail-pull strength, and the like, such that the product
is comparable to wood.  In a preferred embodiment, the
binder will be a self-crosslinking acrylic latex binder
such as Rhoplex TR407 or Hycar 2671.

In combination with the primary binder are
included newsprint, sulfite pulp and vegetable shell
flour, all  of which comprise the cellulosic
ingredients of the composition.  While newsprint and
sulfite pulp are well known components for beater
saturation technology, the combination of all three
components is unique.  Although applicant does not
desire to be bound by any theory of operability, it
appears that the vegetable shell flour possesses the
ability to fill the interstitial voids between the
fibrous particles of pulp and newsprint, thus leading to
a highly preferred packing phenomenon.  Thus, when the
composition is molded and compressed, products having
high densities and very smooth surfaces are obtained.

From about 25 to about 700 parts by weight of
newsprint may be used to practice the present invention;
however, from about 50 to about 400 parts of newsprint
is preferred and from about 90 to about 310 parts of
newsprint is especially preferred.  The sulfite pulp may
be present in from about 25 to about 500 parts by
weight; however, from about 50 to about 350 parts of
sulfite pulp is preferred and from about 90 to about 310
parts is most preferred.

The vegetable shell flour may be derived from
nut shells, such as pecan, walnut, or peanut shells, and
also from other sources such as coffee bean shells and
rice husks.  From about 25 to about 500 parts by weight
of vegetable shell flour may be used; however, from
about 50 to about 350 parts of vegetable shell flour is
preferred, and from about 90 to about 310 parts is most
preferred.

In one preferred embodiment, the
aforementioned ingredients are formulated using standard
beater saturation technology into an aqueous slurry

- 6 -                                    0105722

which preferably comprises from about 2 to about 8%
solids by weight.  It must be kept in mind, however,
that more or less water may be utilized depending on the
desires of the artisan.

In addition to the aforementioned primary
binder and cellulosic ingredients, other materials may
also be present in the slurry.  For example, secondary
binders may be used to promote better adhesion between
the primary binder and the cellulosic materials, provide
better wet strength so that a wet blanket of felted
solids will hold together more readily during
processing, provide improved impact resistance in the
final product, and the like.  Secondary binders are
added for reasons other than to provide wood-like
properties to the product because that is the function
of the primary binder.  Examples of secondary binders
are starch powder, polyvinyl alcohol, fondue cement,
portland cement, medusa cement and the like.  Fondue
cement is especially preferred because it has an
affinity for water and tends not to be lost through the
wires of the fourdrinier apparatus during felting.  The
quantities of these materials may vary depending on
their nature.  For example, from about 10 to about 350
parts by weight of starch powder may be used in relation
to 100 parts of primary binder, although from about 20
to about 100 parts is preferred.  Similarly, from about
30 to about 100 parts of cement may be used, although
from about 50 to about 90 parts is preferred. In the
usual situation, wet end additives such as alum and
ammonium hydroxide will be required to adjust the pH in
order to precipitate a latex binder.  Optionally, the
composition may also contain additional additives such
as wet-strength resins and glass fibers or other
reinforcing fibers.  Preferably, the reinforcing fibers
will be unaffected by the temperature used during the
molding operation.

The cellulosic components of the present
invention will typically comprise by weight from about 43 to about 94% of the final product. Preferably, however, they will comprise from about 60 to about 92% of the final product and, most preferably, from about 73% to about 90%.

As a first step in preparing the slurry described above, a slurry of the cellulosic ingredients is prepared. For example, using standard beater technology such as with an air impeller beater, a master batch slurry is prepared from shredded newsprint, a dispersable form of pulp and the vegetable shell flour. The master batch may be used to advantage in a variety of ways. For example, it may be felted onto fourdrinier wires by means well known in the art. The felted material may be retained in a wet state for later use or it may be dried using a drum or other appropriate means and similarly retained. Alternatively, it may be further mixed with the secondary binders, reinforcing materials, fillers, and the like and cast or molded into a final product. If the dried master batch is used, it can be pulverized, blended while in the dry state with other necessary ingredients and then compressed into a final configuration, or it can be repulped into a slurry, blended with other components, and then placed in a desired configuration.

The preferred method of forming final products from a slurry will usually involve the addition of the secondary additives such as fondue cement, starch, reinforcing materials, wet strength resins and the like to the slurry, after which the pH of the slurry is adjusted with alum and a base such as ammonium hydroxide, or by other means well-known in the art. The primary binder is then added and it precipitates onto the solid particles, giving a slurry which may be placed in a desired configuration.

The components and characteristics of a slurry can be varied substantially depending on the desires of the artisan. Further, the utilities of the resulting slurries may be quite diverse because products varying from furniture to wall and floor coverings can be prepared wherein the cellulosic content is adjusted from relatively high (e.g. 90%) to relatively low (e.g. 45%) levels. Certain preferences will become apparent, however. For example, if the materials are intended for use as functional items such as furniture, a higher primary binder level of perhaps 35-40% will often be preferred in combination with a cellulosic content of perhaps as low as 45%. On the other hand, if a sheet material such as a wall or floor covering is intended, a higher cellulose content on the order of perhaps 85% may be desired, in combination with a correspondingly lower binder content.

If the desired configuration is a sheet product, the sheet may be prepared as described above, laminated together in layers, and pressed or embossed to give composite structures which are usable as wood-type sheet materials for flooring or tile products. Alternatively, the sheets can be pulverized to yield ground stock which can be used as disclosed herein.

Decoratively molded objects such as furniture may be prepared either directly from a slurry or from ground stock. When a slurry is used, a casting having the desired configuration may be prepared using metal or, preferably, silicone rubber molding materials. The casting may be equipped with a vacuum apparatus to assist in the removal of excess water, or it may be a conventional non-vacuum casting. In either event the binder-coated slurry is pumped into the casting and preferably pre-shaped by covering the casting with gauze and roughly shaping the solid using a contoured backing plate. The gauze permits excess water to escape and also permits the backing plate to be separated without damaging the wet pulp. When preshaping is complete, the backing plate is separated, the gauze is removed and the backing plate is reinserted. Then, as a last step, the molded material is dried under heat and pressure, cooled, and removed from the press to give a high-density product.

When ground stock is used, a sheet material 0105722 comprising all of the desired ingredients is prepared and dried. The sheet is then pulverized into stock which preferably has a uniform particle size. It has been found that this may be conveniently accomplished by chilling the sheet prior to pulverizing it. If the sheet is pulverized without chilling, however, lumps and non-uniform particles are often obtained. The use of substantially non-uniform particles will often lead to undesirable ·appearance and strength characteristics and should be avoided. The pulverized stock is next placed in a mold where it is heated under pressure, essentially as described above, to provide a high-density product.

Either of the above methods can be used to prepare products having a wide range of densities, such as from about one to about 55 pcf (16 to 881 $Kg/m^3$). However, they are especially useful to prepare products having densities of at least about 10 pcf (160 $Kg/m^3$), advantageously from about 20 to about 55 pcf (321 to 883 $Kg/m^3$) and, in particular, from about 30 to about 55 pcf (481 to 881 $Kg/m^3$), depending on the desires of the artisan.

The advantages and attributes of the present invention may be more clearly understood by reference to the following examples which are intended to illustrate, but not to limit, the scope of the present invention.

<u>Example 1</u>

This example will illustrate the preparation of a Master Batch. A mixture comprising 2% solids by weight was pulped in a hydropulper for 10 minutes. The mixture comprised water, 16.6 pounds (7.5 Kg) of sulfite pulp, 16.6 pounds (7.5 Kg) of newsprint and 16.6 pounds (7.5 Kg) of pecan shell flour. After refining in a Jordan refiner, the stock was diluted to a consistency of 1% solids and felted onto fourdrinier wires at a wet gauge of 3/32 inch (2.4 mm). The resulting material, which had good wet strength, was rolled up and stored in a closed container for later use.

0105722

## Example 2

A slurry was prepared with an air impeller beater from 7 liters of water and 99.9 grams (dry weight) of Master Batch (Example 1). To the slurry was then added 2.5 grams (dry basis) of wet strength resin (Kymene 2064 from Hercules as a 3.5% aqueous solution) and 6.7 grams of starch powder. Twelve grams of alum and sufficient ammonium hydroxide solution to bring the pH to 7 were added, after which 25 grams of a self-crosslinking acrylic latex primary binder (Hycar 2671 from B. F. Goodrich) was added. The binder immediately precipitated onto the particulate materials. The particulate matter was felted onto fourdrinier-type wires to give a product having a thickness of approximately 1/16 inch (1.6 mm). This product could be held, handled and transported in a wet state without losing its integrity. When dried on a drum at approximately 300°F (150°C), the dried product similarly maintained its integrity and could be held, handled, and transported. This material was amenable to (1) pulverization and recasting and (2) lamination, as hereinafter described.

## Example 3

A quantity of Master Batch was drum-dried at 300°F (150°C) and retained for later use. Subsequently, the sheet material, which had a thickness of 3/32 inch (2.4 mm), was pulverized using a Fitzmill, and two formulations were prepared as follows:

| Ingredient | Example 3A | Example 3B |
|---|---|---|
| Water | 14 Liters | 14 Liters |
| Master batch (dry weight) | 900g | 900g |
| Pecan shell flour | 36.2g | -- |
| Fondue cement | -- | 72.4g |
| Starch powder | 30g | 30g |
| Glass fibers | 9.6g | 9.6g |
| Polyvinyl alcohol (Elvanol BT from duPont) | 10g | 10g |
| Wet strength resin (Kymene 2064 from Hercules; 3.5% aqueous solution) | 251 ml | 251 ml |
| Alum | 36g | 36g |
| Ammonium hydroxide | * | * |
| Acrylic latex binder (dry basis) (Rhoplex TR407 from Rohm & Haas) | 165g | 165g |

*Volume not measured; sufficient quantity added to adjust pH to 7

In preparing these formulations, the master batch and the excess pecan shell flour (as required) were slurried in water and the remaining ingredients were added in order, as applicable. The mixture was made neutral with ammonium hydroxide and, as a last step, the primary binder was added, immediately precipitating onto the particulate materials.

Each slurry was pumped into appropriate molds. As one example, an aluminum mold 9" x 9" x 1/2" (ca 23 cm x 23 cm x 1.3 cm) was filled with slurry, covered with gauze, and a backing plate was inserted. Cold pressure was applied to squeeze out the excess water. The backing plate was then removed, the gauze was removed, and the backing plate was reinserted. The wet, molded material was finally dried at 350-400°F (177-205°C) for 7-15 minutes to give dried 9-inch (23 cm) square tiles. The cellulose content of Example 3A was about 79% whereas that of Example 3B was about 73.5%.

These tiles were tested for Tensile Strength Perpendicular to Surface and were subjected to a Nail Withdrawal Test, both essentially as described in ASTM D 1037-78. They were also subjected to a Transverse Strength test essentially as described in ANSI/ASTM C 209-72. The results obtained were as follows:

| Test | Test Result (average of three measurements) | |
| --- | --- | --- |
| | Example 3A | Example 3B |
| Perp. Tensile Strength (lb./in$^2$ at failure) | 33.2 (2.3 Kg/cm$^2$) | 88.5 (6.2 Kg/cm$^2$) |
| Nail Withdrawal (lb.) at ave. thickness (in.) of | 11.25 (5.1 Kg) 0.434 (1.1 cm) | 15.33 (7.0 Kg) 0.438 (1.11 cm) |
| Transverse Strength (load at failure, lbs.) (modulus of rupture, psi) | 48.9 (22.2 Kg) 835 (58.7 Kg/cm$^2$) | 90.7 (41.2 Kg) 1509 (106.1 Kg/cm$^2$) |
| Apparent Density (pcf) | 32.52 (521 Kg/m$^3$) | 43.09 (690 Kg/m$^3$) |

## Example 4

Using the dry master batch described in Example 3, an aqueous slurry having a solids content of 2% was prepared comprising the following components:

| Ingredient | Quantity |
|---|---|
| Master batch (dry weight) | 1150g |
| Fondue cement | 72.4g |
| Starch powder | 30g |
| Polyvinyl alcohol (Elvanol BT from duPont) | 10g |

The slurry was refined using a Jordan refiner, the solids content was adjusted to 1.5%, and the following ingredients were added, in order:

| Ingredient | Quantity |
|---|---|
| Glass fibers | 14.4g |
| Wet strength resin (Kymene 2064 from Hercules; 3.5% aqueous solution) | 251 ml |
| Alum | 36g |
| Ammonium hydroxide | * |
| Acrylic latex binder (dry basis) (1:1 blend of Rhoplex TR407 from Rohm & Haas and Hycar 2671 from B. F. Goodrich) | 330g |

*Volume not measured; sufficient quantity added to adjust pH to 7

The solids content was adjusted to 1% and the slurry was felted onto fourdrinier wires to give a wet mat of material. The mat was drum dried at 300°F to give a layer of material 1/16 inch (1.6 mm) thick having a cellulose content of about 49%. This sheet was handled in a variety of ways, as follows:

Example 4A

This example will illustrate the preparation of sheet product by pulverizing the sheets of Example 4 and forming the powder in a mold. A quantity of the 1/16-inch (1.6-mm) thick sheeting prepared according to Example 4 was cut into approximately 1 to 2-inch (2.54-5.1 cm) strips, covered with pulverized dry ice for 30 seconds and the sheet (including dry ice) was fed into a Fitzmill. The resulting particles were of substantially uniform size, were free of lumps and had a consistency comparable to freeze-dried coffee.

A quantity of this material (at room temperature after sublimation of the dry ice) was placed in a 1/2-inch (12.7 mm) mold and compressed at about 425°F (219°C) for 20 minutes under about 1,100 psi (77 $Kg/cm^2$) pressure.

The resulting board, which had a nominal thickness of 1/2 inch (12.7 mm) was tested for perpendicular tensile strength and perpendicular screw withdrawal essentially according to ASTM D 1037-78, giving the following results:

| Test | Particleboard Control | Fiberboard Control | Example 4A |
|---|---|---|---|
| Board thickness (inch) | 0.501 | 0.505 | 0.460 |
| | (1.27 cm) | (1.28 cm) | (1.17 cm) |
| Perp. tensile strength | | | |
| (lb./in$^2$ at failure) | 145.5 | 161.5 | 251.7 |
| | (10.2 $Kg/cm^2$) | (11.3 $Kg/cm^2$) | (17.6 $Kg/cm^2$) |
| Perp. screw withdrawal | | | |
| (lb. at failure) | 235.8 | 328.8 | 276.3 |
| | (106.9 Kg) | (149.1 Kg) | (125.3 Kg) |
| Apparent Density (pcf) | 50.76 | 46.32 | 69.12 |
| | (813 $Kg/m^3$) | (742 $Kg/m^3$) | (1107 $Kg/m^3$) |
| Modulus of Rupture (psi) | 3546 | 5394 | 2447 |
| | (249 $Kg/cm^2$) | (379 $Kg/cm^2$) | (172 $Kg/cm^2$) |

Example 4B

This example will illustrate the lamination of a plurality of layers as obtained from Example 4 to provide a laminated vinyl structure. Seven layers of sheets prepared according to Example 4 were placed in a press at 425°F (219°C) for 20 minutes under 1,160 psi (81.2 $Kg/cm^2$) pressure. One face of the press was provided with a wood grain embossing plate which imparted a wood grain finish to the face of the

EPA-7344

material. The resulting product had a definite wood grain appearance as would be found with a decorative wall panel or as inside backing for a piece of furniture, the latter typically being provided in the prior art by hardboard.

## Example 5

This example will illustrate the dry forming of a molded product. The proportions of ingredients, excluding the wet end additives (water, Kymene, alum and ammonium hydroxide), are set forth in Example 3B.

The pulverized Master Batch was dry mixed with the cement, starch, glass fibers, polyvinyl alcohol and binder, and the mixture was placed in a mold. The mold was heated to about 400°F (205°C) for about 20 minutes under about 1100 psi (77 Kg/cm$^2$) pressure to produce a product which was somewhat less satisfactory than the products produced according to Examples 3 and 4.

Claims:

1. A cellulosic composition useful to prepare a shaped cellulosic article, said composition comprising by weight 100 parts of primary binder, from 25 to 700 parts of newsprint, from 25 to 500 parts of sulfite pulp, from 25 to 500 parts of vegetable shell flour, and a suitable quantity of water.

2. A shaped cellulosic article, said article comprising a composition comprising by weight 100 parts of primary binder, from 25 to 700 parts of newsprint, from 25 to 500 parts of sulfite pulp and from 25 to 500 parts of vegetable shell flour.

3. A process for preparing a shaped cellulosic article, said process comprising the steps of:

preparing an aqueous slurry comprising by weight from 25 to 700 parts of newsprint, from 25 to 500 parts of sulfite pulp, from 25 to 500 parts of vegetable shell flour, and optional components;

adjusting the pH as necessary to cause precipitation of a subsequently added primary binder onto the solid components of said slurry;

dispersing 100 parts of said primary binder in said slurry to form a slurry composition;

disposing said slurry composition in a desired configuration;

removing excess water to form a shaped product; and

drying said shaped product.

4. The invention as set forth in claim 3, comprising the additional steps of

pulverizing said shaped article,

placing the pulverized material in a casting having a desired configuration, and

molding said pulverized material.

5.  The invention as set forth in claim 4, wherein said shaped article is chilled before it is pulverized.

6.  The invention as set forth in claim 4 or claim 5, wherein said casting is provided with a wood grain embossing plate which imparts a wood grain appearance to the final product.

7.  A process for preparing a shaped cellulosic article, said process comprising the steps of:

preparing a master batch slurry comprising from 25 to 700 parts of newsprint, from 25 to 500 parts of sulfite pulp and from 25 to 500 parts of vegetable shell flour;

forming said master batch slurry into a mat;

intermixing said mat with optional components and 100 parts of primary binder to form an intermixed composition; and

forming the intermixed composition into a desired configuration.

8.  The invention as set forth in claim 7, wherein said article is prepared by drying and pulverizing said mat, and intermixing the pulverized material with said optional components and said binder.

9.  The invention as set forth in claim 8, wherein said intermixing is accomplished by preparing a slurry comprising said pulverized material and said optional components; adjusting the pH as necessary to cause precipitation of said primary binder onto the solid components of said slurry when said primary binder is subsequently added; dispersing said primary binder in said slurry to form the intermixed composition; disposing said slurry in a desired configuration; removing excess water to form a shaped article; and drying said shaped article.

10. The invention as set forth in claim 8, wherein said pulverized material, optional components and binder are intermixed in a dry state; placed in a casting having a desired configuration; and molded.

11. The invention as set forth in any one of claims 1 to 10, wherein said product comprises not less than 45% cellulosic material.

12. The invention as set forth in claim 11, wherein said product comprises not less than 60% cellulosic material, advantageously from about 73 to 90% cellulosic material.

13. The invention as set forth in any one of claims 1 to 12, wherein the density of said product is not less than about 10 lb. per cubic foot (160 $Kg/m^3$), advantageously not less than about 20 lb. per cubic foot (320 $Kg/m^3$), and preferably not less than about 30 lb. per cubic foot (481 $Kg/m^3$).

14. The invention as set forth in any one of claims 1 to 13, wherein said composition comprises from 50 to 400 parts of newsprint, from 50 to 350 parts of sulfite pulp, and from 50 to 350 parts of vegetable shell flour for every 100 parts of primary binder.

15. The invention as set forth in claim 14, wherein the proportions, for every 100 parts of binder, are from 90 to 310 parts of each of the newsprint, the sulfite pulp and the vegetable shell flour.

16. The invention as set forth in any one of claim 1 to 15, wherein said primary binder is a melamine binder, a urea-formaldehyde binder or a latex binder.

17. The invention as set forth in claim 16, wherein said primary binder is a latex binder selected from the group consisting of polyvinyl chloride binders, polyacrylate binders, SBR binders, chlorinated SBR binders and carboxylated SBR binders.

18. The invention as set forth in claim 17, wherein said primary binder is a self cross-linking acrylic latex binder.

19. The invention as set forth in any one of claims 1 to 18, wherein the composition comprises at least one secondary binder.

20. The invention as set forth in claim 19, wherein said secondary binder is selected from the group consisting of powdered starch, cement, and polyvinyl alcohol.

21. The invention as set forth in claim 20, wherein said cement is selected from the group consisting of portland cement, fondue cement and medusa cement.

22. The invention as set forth in any one of claims 1 to 21, wherein the composition comprises reinforcing fibers.

23. The invention as set forth in claim 22, wherein said reinforcing fibers are glass fibers.

0105722

**European Patent Office**

**EUROPEAN SEARCH REPORT**

Application number

EP 83 30 5868

## DOCUMENTS CONSIDERED TO BE RELEVANT

| Category | Citation of document with indication, where appropriate, of relevant passages | Relevant to claim |
|---|---|---|
| A | US-A-1 998 190 (H.J. FINDER et al.)<br>* Whole document *<br><br>--- | 1-3,11,12 |
| A | PLASTICS ENGINEERING, vol. 31, no. 5, May 1975, pages 40-42, Greenwich, Conn., USA<br>G.R. LIGHTSEY et al.: "Fillers from peanut hulls - better than wood?" * Whole article *<br><br>--- | 1 |
| A | US-A-2 461 900 (C.W. JOHNSON)<br><br>* Whole document *<br><br>--- | 1,2,11,12,16,17,19 |
| A | GB-A-2 050 459 (S. GASLAND)<br><br>* Whole document *<br><br>--- | 1,2,11,12,16,17,19-23 |
| A | GB-A-1 584 387 (WILKINSON SWORD)<br><br>* Whole document *<br><br>--- | 1-3,11,13,16,17,19,20,22 |
| A | US-A-3 542 641 (M.J. SHOWALTER et al.)<br>* Whole document *<br><br>---   -/- | 3,6 |

**CLASSIFICATION OF THE APPLICATION (Int. Cl. 3)**

D 21 C 9/00
D 21 J 1/00
D 21 J 3/00
D 21 J 7/00
D 21 D 3/00
B 44 F 9/02
C 04 B 31/00

**TECHNICAL FIELDS SEARCHED (Int. Cl. 3)**

B 44 F
C 04 B
C 08 L
D 21 C
D 21 H
D 21 J

The present search report has been drawn up for all claims

| Place of search<br>THE HAGUE | Date of completion of the search<br>04-01-1984 | Examiner<br>NESTBY K. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## EUROPEAN SEARCH REPORT

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-1 060 917 (TELEFUNKEN) <br> * Whole document * | 6 | |
| A | US-A-3 438 853 (C. HAINES, JR. et al.) <br><br> * Whole document * | 3,13, 16,17, 19-21 | |
| A | DE-C- 6 031 (W. WARWICK ISAAC) | | |
| A | US-A-2 041 217 (V.L. SMITHERS et al.) | | |
| A | US-A-2 346 943 (F. ROSENTHAL) | | |
| A | US-A-2 319 182 (E. v.d. PIJL) | | TECHNICAL FIELDS SEARCHED (Int. Cl. ³) |
| A | US-A-2 440 789 (E. v.d. PIJL) | | |
| A | GB-A-1 129 642 (THE PONTEFRACT BOX COMPANY) | | |
| A | GB-A- 632 911 (F. BACCI) | | |
| | --- -/- | | |

The present search report has been drawn up for all claims

| Place of search | Date of completion of the search | Examiner |
|---|---|---|
| THE HAGUE | 04-01-1984 | NESTBY K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0105722

European Patent
Office

EUROPEAN SEARCH REPORT

Application number

EP 83 30 5868

## DOCUMENTS CONSIDERED TO BE RELEVANT

Page 3

| Category | Citation of document with indication, where appropriate, of relevant passages | Relevant to claim | CLASSIFICATION OF THE APPLICATION (Int. Cl. 3) |
|---|---|---|---|
| A | US-A-3 390 003 (W.C. COOPER) | | |
| A | US-A-3 850 677 (R.C. VASISHTH) | | |
| A | US-A-3 686 384 (L.A. RUNTON) | | |

TECHNICAL FIELDS
SEARCHED (Int. Cl. 3)

The present search report has been drawn up for all claims

| Place of search | Date of completion of the search | Examiner |
|---|---|---|
| THE HAGUE | 04-01-1984 | NESTBY K. |